# EUROPÄISCHE PATENTSCHRIFT

(11) **EP 3 274 789 B1**
(45) Veröffentlichungstag und Bekanntmachung des Hinweises auf die Patenterteilung: **09.01.2019**
(21) Anmeldenummer: 16706801.4
(22) Anmeldetag: 19.02.2016
(51) Int. Cl.: G06F 3/0488, G06F 3/01, G02B 27/01

(54) **KRAFTFAHRZEUGSIMULATIONSANORDNUNG ZUR SIMULATION EINER VIRTUELLEN UMGEBUNG MIT EINEM VIRTUELLEN KRAFTFAHRZEUG UND VERFAHREN ZUR SIMULATION EINER VIRTUELLEN UMGEBUNG**
MOTOR VEHICLE SIMULATION SYSTEM FOR SIMULATING A VIRTUAL ENVIRONMENT WITH A VIRTUAL MOTOR VEHICLE AND METHOD FOR SIMULATING A VIRTUAL ENVIRONMENT
ENSEMBLE DE SIMULATION DE VÉHICULE AUTOMOBILE POUR LA SIMULATION D'UN ENVIRONNEMENT VIRTUEL AVEC UN VÉHICULE AUTOMOBILE VIRTUEL ET PROCÉDÉ DE SIMULATION D'UN ENVIRONNEMENT VIRTUEL

(30) Priorität: 26.03.2015 DE 102015003883
(43) Veröffentlichungstag der Anmeldung: 31.01.2018
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2016/000299
(87) Internationale Veröffentlichungsnummer: WO 2016/150542

(56) Entgegenhaltungen:
- DE-U1- 29 720 443
- US-A1- 2012 113 223
- US-A1- 2014 204 002

## Beschreibung

Die Erfindung geht aus von einer Kraftfahrzeugssimulationsanordnung zur Simulation einer virtuellen Umgebung mit einem virtuellen Kraftfahrzeug, wobei die Kraftfahrzeugssimulationsanordnung eine Simulationseinheit aufweist, die dazu ausgelegt ist, Bilder einer virtuellen Umgebung mit einem virtuellen Kraftfahrzeug zu erzeugen. Des Weiteren umfasst die Kraftfahrzeugssimulationsanordnung eine am Kopf tragbare Anzeigeeinrichtung, die dazu ausgelegt ist, die von der Simulationseinheit erzeugten Bilder anzuzeigen. Darüber hinaus weist die Kraftfahrzeugssimulationsanordnung ein reales Bedienelement auf, mittels welchem die Kraftfahrzeugssimulationsanordnung durch einen Benutzer zur Konfiguration des virtuellen Kraftfahrzeugs bedienbar ist, wobei die Simulationseinheit weiterhin dazu ausgelegt ist, bei einer Erzeugung von Bildern der virtuellen Umgebung eine von einem virtuellen Standort ausgehende Perspektive, aus welcher die virtuelle Umgebung dargestellt wird, festzulegen. Des Weiteren geht die Erfindung aus von einem Verfahren zur Simulation einer virtuellen Umgebung mit einem virtuellen Kraftfahrzeug mittels einer solchen Kraftfahrzeugssimulationsanordnung.

Aus dem Stand der Technik ist es bekannt, zur Simulation virtueller Umgebungen am Kopf tragbare Anzeigeeinrichtungen, wie beispielsweise VR-Brillen, AR-Brillen, Headmounted Displays, und so weiter, zu nutzen. Virtuelle Umgebungen lassen sich damit zweidimensional oder auch dreidimensional und damit besonders realistisch darstellen. Der Schaffung verschiedenster virtueller Welten sind damit keine Grenzen gesetzt. Beispielsweise kann sich ein Benutzer mittels einer derartigen Anordnung verschiedene Kraftfahrzeugmodelle virtuell simulieren lassen, zum Beispiel bei einem Händler, und sich auch verschiedene Konfigurationen eines Kraftfahrzeugmodells anzeigen lassen. Dadurch wird es ermöglicht, dass ein Benutzer Kraftfahrzeugmodelle oder bestimmte Konfigurationen begutachten kann, auch wenn der Kraftfahrzeughändler das gewünschte Modell oder die gewünschte Konfiguration gerade nicht vorrätig hat.

Das Dokument US 2014/0204002 A1 offenbart ein Bereitstellen einer Niedrig-Latenz-Interaktion in einer virtuellen Umgebung. In einer Ausführungsform wird ein Initialbild einer Hand und eine initiale Tiefeninformation, welche eine initiale tatsächliche Position darstellt, empfangen. Das Initialbild wird in der virtuellen Umgebung auf eine initiale virtuelle Position projiziert. Eine segmentierte Version des Initialbildes wird zur Anzeige in der virtuellen Umgebung an der initialen virtuellen Position bereitgestellt. Ein weiteres Bild der Hand und Tiefeninformationen, die eine weitere tatsächliche Position darstellen, werden empfangen. Das weitere Bild wird in der virtuellen Umgebung auf eine weitere virtuelle Position projiziert. Eine segmentierte Version des weiteren Bildes wird zur Anzeige an der weiteren virtuellen Position bereitgestellt. Eine Kollision zwischen einer dreidimensionalen Darstellung der Hand und einem virtuellen oder physischen Objekt wird detektiert.

Das Dokument DE 297 20 443 U1 offenbart eine Kalibration einer Handstellung und Auswahl eines virtuellen Bildes für einen Virtual-Reality-Fahrzeugsimulator.

Das Dokument US 2012/0113223 A1 offenbart Techniken zur Nutzerinteraktion in erweiterter Realität.
Wünschenswert wäre es hierbei, dass der Benutzer die Bedienung der Kraftfahrzeugssimulationsanordnung, zum Beispiel zur Konfiguration eines virtuellen Kraftfahrzeugs, mittels eines realen Bedienelements möglichst einfach bedienen kann. Die Problematik bei der Bedienung von Bedienelementen in Kombination mit am Kopf tragbaren Anzeigeeinrichtungen besteht allerdings darin, dass ein Benutzer, der eine am Kopf tragbare Anzeigeeinrichtung trägt und dem gerade eine virtuelle Umgebung dargestellt wird, seine reale Umgebung nicht sehen kann. Bekannte Bedienelemente, wie beispielsweise Maus, Tastatur, Joystick, Tasten, Knöpfe, Touchscreens oder Touchpads sind damit für einen Benutzer im quasi blinden Zustand schwer zu finden und auch schwer bis gar nicht zu bedienen. Um also eine Bedienmöglichkeit mit derartigen Bedienelementen bereitstellen zu können, müsste daher der Benutzer zur Bedienung entweder die am Kopf tragbare Anzeigeeinrichtung abnehmen oder, sollte die Anzeigeeinrichtung dazu ausgelegt sein, von der Darstellung der virtuellen Umgebung zur Darstellung der realen Umgebung wechseln. Dies unterbricht in beiden Fällen die Simulation der virtuellen Umgebung und ist zudem für einen Benutzer sehr umständlich und zeitaufwendig. Zwar kann hierbei auch auf Bedienmöglichkeiten ausgewichen werden, durch die sich die Problematik, dass die reale Umgebung nicht gesehen werden kann, umgangen werden kann, wie beispielsweise durch in VR-Brillen integrierte Eyetracking-Systeme. Für die Bedienung der Kraftfahrzeugssimulationsanordnung durch herkömmliche, manuell zu bedienende Bedienelemente bestehen die oben genannten Probleme jedoch weiterhin.

Aufgabe der vorliegenden Erfindung ist es daher, eine Kraftfahrzeugssimulationsanordnung und ein Verfahren zur Simulation einer virtuellen Umgebung bereitzustellen, die einem Benutzer auch während einer Darstellung einer virtuellen Umgebung mittels einer am Kopf tragbaren Anzeigeeinrichtung eine möglichst einfache Bedienung der Kraftfahrzeugssimulationsanordnung, insbesondere mittels manuell zu bedienender Bedienelemente, ermöglichen.

Diese Aufgabe wird gelöst durch eine Kraftfahrzeugssimulationsanordnung und ein Verfahren zur Simulation einer virtuellen Umgebung gemäß den unabhängigen Ansprüchen. Vorteilhafte Ausgestaltungen der Erfindung finden sich in den abhängigen Ansprüchen.

Die erfindungsgemäße Kraftfahrzeugssimulationsanordnung zeichnet sich nun dadurch aus, dass diese dazu ausgelegt ist, ein virtuelles Bedienelement in den Bildern der virtuellen Umgebung darzustellen, wobei die Kraftfahrzeugssimulationsanordnung weiterhin ein Erfassungsmittel aufweist, das dazu ausgelegt ist, zumindest eine Relativposition zwischen der am Kopf tragbaren Anzeigeeinrichtung und dem realen Bedienelement zu ermitteln. Des Weiteren ist die Simulationseinheit dazu ausgelegt, die ermittelte Relativposition bei der Bilderzeugung derart zu berücksichtigen, dass das virtuelle Bedienelement an einem Ort in der virtuellen Umgebung dargestellt ist, der eine Relativposition zum virtuellen Standort aufweist, wobei die Relativposition zwischen dem virtuellen Bedienelement und dem virtuellen Standort der Relativposition zwischen der am Kopf tragbaren Anzeigeeinrichtung und dem realen Bedienelement entspricht.

Durch diese Ausgestaltung wird es ermöglicht, dass der Benutzer das in der virtuellen Umgebung dargestellte virtuelle Bedienelement am selben Ort sieht, an dem er das reale Bedienelement ohne am Kopf getragene Anzeigeeinrichtung sieht. Das reale Bedienelement wird also sozusagen ortstreu in der virtuellen Umgebung wiedergegeben beziehungsweise dargestellt.

Greift der Benutzer nach dem in der virtuellen Umgebung dargestellten virtuellen Bedienelement, so erfasst er automatisch das reale Bedienelement. Durch die Erfindung ist es damit möglich, das reale Bedienelement besonders einfach aufzufinden und zu bedienen, ohne dafür die am Kopf tragbare Anzeigeeinrichtung abnehmen zu müssen oder anderweitig die Simulation der virtuellen Umgebung unterbrechen zu müssen.

Bevorzugt findet die Ermittlung der Relativposition zwischen der am Kopf tragbaren Anzeigeeinrichtung und dem realen Bedienelement wiederholt, beispielsweise periodisch, statt, sowie auch die Aktualisierung der Bilddaten der virtuellen Umgebung unter Berücksichtigung der jeweils ermittelten Relativposition. Die dargestellte Perspektive ändert sich somit korrespondierend zu einer Kopfbewegung des Benutzers, der die am Kopf tragbare Anzeigeeinrichtung trägt, wobei zu jedem Zeitpunkt das dargestellte virtuelle Bedienelement dieselbe Relativposition zum virtuellen Standort aufweist, welche auch das reale Bedienelement zur Anzeigeeinrichtung aufweist.

Bei einer vorteilhaften Ausgestaltung der Erfindung ist die Kraftfahrzeugssimulationsanordnung dazu ausgelegt, falls sich mindestens ein Teil einer Hand eines Benutzers in einem vorbestimmten Erfassungsbereich der Kraftfahrzeugssimulationsanordnung befindet, eine Position des mindestens einen Teils der Hand des Benutzers in Bezug auf das reale Bedienelement zu ermitteln und die ermittelte Position bei der Erzeugung der Bilder derart zu berücksichtigen, dass in der virtuellen Umgebung ein den mindestens einen Teil der Hand repräsentierendes virtuelles Anzeigeelement in derselben Position in Bezug auf das virtuelle Bedienelement dargestellt wird.

Über das virtuelle Anzeigeelement wird einem Benutzer somit in der virtuellen Umgebung auch die aktuelle Position seiner Hand angezeigt, insbesondere in Bezug auf das virtuelle Bedienelement und damit auch in Bezug auf das reale Bedienelement. Auch dies trägt zusätzlich zu einer Erleichterung der Bedienung des realen Bedienelements bei. Zusätzlich hat die Darstellung des virtuellen Anzeigeelements den großen Vorteil, dass dadurch auch die Kollisionsgefahr und eine damit einhergehende Verletzungsgefahr des Benutzers reduziert werden kann, da das Risiko, dass sich ein Benutzer beim Greifen nach dem realen Bedienelement an diesem stößt, reduziert wird, da dem Benutzer sowohl der Ort des realen Bedienelements als auch der Ort seiner Hand in der Darstellung der virtuellen Umgebung angezeigt werden. Zudem wird durch die Darstellung des virtuellen Anzeigeelements der Wegfall der Hand-Auge-Koordinationsmöglichkeit wieder hergestellt, was wiederum die Bedienung erleichtert.

Die Anzeige eines zur Hand des Benutzers korrespondierenden Anzeigeelements hat zudem besonders große Vorteile in Kombination mit der Ausgestaltung der Erfindung, bei der das reale Bedienelement eine berührsensitive Bedienoberfläche aufweist, sodass das reale Bedienelement dazu ausgelegt ist, eine Berührung der Bedienoberfläche durch einen Benutzer zu erfassen, wobei insbesondere das reale Bedienelement als Touchpad oder Touchscreen ausgebildet ist. Gerade mit der Ausbildung des Bedienelements als Touchscreen oder Touchpad ist es besonders wichtig, dass einem Benutzer der Ort seiner Hand oder einem Teil davon, wie beispielsweise einem Finger, angezeigt wird, da es bei der Bedienung eines Touchpads oder Touchscreens vor allem auf den Berührort ankommt. Ohne die Darstellung eines zur Hand oder einem Finger korrespondierenden Anzeigeelements wäre eine gezielte Bedienung eines Touchscreens oder Touchpads nicht möglich. So lassen sich durch die Darstellung des virtuellen Anzeigeelements gerade in Kombination mit einem als Touchpad oder Touchscreen ausgebildeten Bedienelement Fehlbedienungen effektiv vermeiden.

Bei einer weiteren vorteilhaften Ausgestaltung der Erfindung ist die Kraftfahrzeugssimulationsanordnung derart eingerichtet, dass bei der Darstellung des virtuellen Bedienelements in der virtuellen Umgebung das virtuelle Bedienelement eine geometrische Ausgestaltung aufweist, die der geometrischen Ausgestaltung des realen Bedienelements entspricht bzw. mit dieser identisch ist. Zumindest ist es bevorzugt, dass bei einer Ausbildung des realen Bedienelements als Touchpad oder Touchscreen mit einer berührsensitiven Bedienoberfläche wenigstens diese berührsensitive Bedienoberfläche in ihrer geometrischen Ausgestaltung beziehungsweise ihren Abmessungen mit der in der virtuellen Umgebung dargestellten virtuellen Bedienoberfläche übereinstimmt. Auch dies vermeidet Fehlbedienungen und verhindert bei der Bedienung ein Vorbeifassen am realen Bedienelement sowie auch ein unbeabsichtigtes Zusammenstoßen mit diesem.

Bei einer weiteren vorteilhaften Ausgestaltung der Erfindung ist die Kraftfahrzeugssimulationsanordnung derart eingerichtet, dass durch eine Betätigung des realen Bedienelements in einem vorbestimmten Bereich der Bedienoberfläche eine zumindest bis zum Zeitpunkt der Betätigung diesem vorbestimmten Bereich zugeordnete Funktion ausgelöst wird. Weiterhin ist die Kraftfahrzeugssimulationsanordnung dazu ausgelegt, in der virtuellen Umgebung einen der Funktion zugeordneten Menüpunkt auf dem virtuellen Bedienelement in einem virtuellen Bereich des virtuellen Bedienelements darzustellen, der in seiner Anordnung bezüglich des virtuellen Bedienelements zu einer Anordnung des vorbestimmten Bereichs des realen Bedienelements bezüglich des realen Bedienelements korrespondiert. Auf diese Weise kann dem Benutzer ein virtuelles Menü dargestellt werden, und zwar ebenfalls ortstreu, sodass beispielsweise das Auswählen eines Menüpunkts in der virtuellen Umgebung dazu führt, dass der Benutzer automatisch in den richtigen Bereich der Bedienoberfläche des realen Bedienelements greift und die diesem Bereich zugeordnete Funktion auslöst. Das virtuell dargestellte Bedienelement ist damit quasi ein virtueller Touchscreen. Dabei muss das reale Bedienelement nicht notwendigerweise ebenfalls als Touchscreen ausgebildet sein, sondern kann auch als einfaches Touchpad bereitgestellt sein, was eine deutlich günstigere Ausgestaltung des realen Bedienelements zulässt.

Bevorzugt ist das reale Bedienelement dennoch als Touchscreen ausgebildet, da es so möglich ist, die Kraftfahrzeugssimulationsanordnung sowohl mit als auch ohne am Kopf getragene Anzeigeeinrichtung zu bedienen. Auch sind so Bedienhandlungen eines Benutzers, der gerade die Anzeigeeinrichtung am Kopf trägt, für außenstehende Personen, die nicht in die Simulation eingebunden sind, nachvollziehbar. Ein Benutzer kann somit einfacher durch außenstehende Personen, wie z.B. durch einen Fahrzeugverkäufer, in der Bedienung unterstützt werden, wie beispielsweise bei der Navigation durch die Menüstruktur.

Wie bereits beschrieben, ist die Darstellung eines zumindest einen Teil einer Hand des Benutzers repräsentierenden virtuellen Anzeigeelements in der virtuellen Umgebung besonders vorteilhaft. Dies lässt sich nun auf unterschiedliche Weise, insbesondere bei einer Ausbildung des realen Bedienelements als Touchpad oder Touchscreen, umsetzen. Bei einer Ausgestaltung der Erfindung ist das reale Bedienelemente dazu ausgelegt, bei einer Berührung der Bedienoberfläche einen Berührort als Position des mindestens einen Teils der Hand des Benutzers zu erfassen, wobei die Kraftfahrzeugssimulationsanordnung dazu ausgelegt ist, das virtuelle Bedienelement als virtuellen Touchscreen darzustellen und die ermittelte Position an einer korrespondierenden Stelle des virtuellen Touchscreens durch das virtuelle Anzeigeelement darzustellen. Dabei kann es beispielsweise vorgesehen sein, dass das virtuelle Anzeigeelement in der virtuellen Umgebung erst dann dargestellt wird, wenn das reale Bedienelement vom Benutzer berührt wird. Dies stellt eine besonders einfache und kostengünstige Ausgestaltung dar, da zur Erfassung des Berührorts auf der Bedienoberfläche die in Touchpads oder Touchscreens herkömmlicherweise verwendete Sensorik benutzt werden kann. Wenn einem Benutzer der Berührort erst dann in der virtuellen Umgebung angezeigt wird, wenn eine Berührung des Touchscreens oder Touchpads bereits stattgefunden hat, ist es vorteilhaft, wenn das reale Bedienelement, insbesondere das Touchpad oder der Touchscreen, derart ausgestaltet ist, dass eine Funktion nicht bereits schon bei bloßer Berührung der Bedienoberfläche ausgelöst wird, sondern erst ab einem vorbestimmten Bediendruck beziehungsweise einer vorbestimmten Bedienkraft, die der Benutzer mit zumindest einem Teil seiner Hand auf die Bedienoberfläche ausübt. Damit ist es vorteilhafterweise möglich, dem Benutzer den Berührort auf dem realen Bedienelement durch die Darstellung des virtuellen Anzeigeelements in der virtuellen Umgebung darzustellen. Dieser kann daraufhin seinen Finger zu einem gewünschten Menüpunkt bewegen, ohne dabei eine Funktion auszulösen, und erst wenn der gewünschte Menüpunkt erreicht ist, kann der Benutzer durch Ausüben einer bestimmten Bedienkraft die zugeordnete Funktion aktivieren.

Des Weiteren stellt es auch eine vorteilhafte Ausgestaltung der Erfindung dar, wenn der Erfassungsbereich der Kraftfahrzeugssimulationsanordnung einen Erfassungsbereich mit vorbestimmten Abmessungen in Bezug auf das reale Bedienelement darstellt, wobei das reale Bedienelement ein zweites Erfassungsmittel aufweist, das dazu ausgelegt ist, die Position des mindestens einen Teils der Hand des Benutzers in Bezug auf das reale Bedienelement, insbesondere dreidimensional, zu erfassen. Entsprechend ist das zweite Erfassungsmittel bevorzugt dazu ausgelegt, den Ort der Hand des Benutzers in Bezug auf das reale Bedienelement zu erfassen, bevor der Benutzer das reale Bedienelement tatsächlich berührt. Damit lässt es sich vorteilhafterweise bewerkstelligen, dass dem Benutzer das virtuelle Anzeigeelement, welches die Position seiner Hand beziehungsweise seines Fingers repräsentiert, bereits bei Annäherung an das reale Bedienelement ortstreu dargestellt wird. Dies ermöglicht gezielte Bedienhandlungen und verringert wiederum zudem die Gefahr eines unbeabsichtigten Zusammenstoßes mit dem realen Bedienelement.

Diese dreidimensionale Erfassung der Position des zumindest einen Teils der Hand des Benutzers lässt sich jedoch nicht nur durch ein entsprechendes, im realen Bedienelement verbautes Erfassungsmittel bewerkstelligen, sondern auch beispielsweise durch ein Erfassungsmittel, das nicht Teil des realen Bedienelements ist, sondern von diesem separiert. Beispielsweise stellt es ebenfalls eine vorteilhafte Ausgestaltung der Erfindung dar, wenn der Erfassungsbereich der Kraftfahrzeugssimulationsanordnung einen Erfassungsbereich mit vorbestimmten Abmessungen in Bezug auf die am Kopf tragbare Anzeigeeinrichtung darstellt, wobei die am Kopf tragbare Anzeigeeinrichtung ein zweites Erfassungsmittel aufweist, das dazu ausgelegt ist, die Position des mindestens einen Teils der Hand des Benutzers in Bezug auf das reale Bedienelement und/oder in Bezug auf die am Kopf tragbare Anzeigeeinrichtung, insbesondere dreidimensional, zu ermitteln. Auf diese Weise ist es ebenfalls möglich, dem Benutzer den Ort seiner Hand durch das virtuelle Anzeigeelement in Bezug zum virtuellen Bedienelement darzustellen, auch ohne, dass dafür eine Berührung des realen Bedienelements erforderlich ist. Dazu ist es nicht erforderlich, dass das zweite Erfassungsmittel, welches an der am Kopf tragbaren Anzeigeeinrichtung angeordnet ist, notwendigerweise dazu ausgelegt ist, auch den Ort des realen Bedienelements zu erfassen oder die Relativposition der Hand des Benutzers in Bezug auf das reale Bedienelement direkt zu erfassen. Da die Kraftfahrzeugssimulationsanordnung bereits ein erstes Erfassungsmittel aufweist, mittels welchem die Relativposition zwischen der am Kopf tragbaren Anzeigeeinrichtung und dem realen Bedienelement ermittelt wird, ist es ausreichend, wenn das zweite Erfassungsmittel der am Kopf tragbaren Anzeigeeinrichtung auch nur lediglich die Position der Hand des Benutzers in Bezug zur am Kopf tragbaren Anzeigeeinrichtung erfasst. Bei einer Eins-zu-Eins-Umsetzung der Positionen des realen Bedienelements zur am Kopf tragbaren Anzeigeeinrichtung und zur erfassten Hand des Benutzers in Bezug zur am Kopf tragbaren Anzeigeeinrichtung in der virtuellen Umgebung ergibt sich automatisch auch eine korrekte Eins-zu-Eins-Umsetzung der Relativposition zwischen der Hand des Benutzers und dem realen Bedienelement in der virtuellen Umgebung. Ein weiterer Vorteil dieser Ausgestaltung besteht darin, dass es zur Erfassung der Position des zumindest einen Teils der Hand des Benutzers nicht erforderlich ist, dass sich der Benutzer in der Nähe des realen Bedienelements befindet. Zudem ist es auch möglich, dieses zweite in die am Kopf tragbare Anzeigeeinrichtung integrierte Erfassungsmittel zum Beispiel zur Gestenerfassung und Gestensteuerung zu verwenden. Damit lassen sich ohne zusätzlichen Aufwand noch mehr Funktionalitäten bei der Bedienung der Kraftfahrzeugssimulationsanordnung bereitstellen.

Andererseits hat dem gegenüber ein von der am Kopf tragbaren Anzeigeeinrichtung separates, beispielsweise am realen Bedienelement angeordnetes zweites Erfassungsmittel den Vorteil, dass sich dadurch das Gewicht der am Kopf tragbaren Anzeigeeinrichtung reduzieren lässt, was für den Tragekomfort vorteilhaft ist.

Bei einer weiteren vorteilhaften Ausgestaltung der Erfindung ist das zweite Erfassungsmittel dazu ausgelegt, eine geometrische Handstruktur der Hand des Benutzers zu erfassen, wobei die Kraftfahrzeugssimulationsanordnung dazu ausgelegt ist, als Anzeigeelement in der virtuellen Umgebung eine virtuelle Hand mit einer geometrischen Handstruktur darzustellen, die der durch das zweite Erfassungsmittel ermittelten geometrischen Handstruktur entspricht. Dadurch ist es vorteilhafterweise möglich, dass dem Benutzer auch die Ausrichtung seiner Hand und der Finger in der virtuellen Umgebung angezeigt wird, was eine korrekte Ausrichtung der Hand vor der eigentlichen Bedienhandlung ermöglicht und die Bedienung damit zusätzlich erleichtert.

Bei einer weiteren vorteilhaften Ausgestaltung der Erfindung ist das reale Bedienelement an einer realen Haltevorrichtung, die insbesondere als Stele und/oder Ständer und/oder Standfuß ausgebildet ist, angeordnet, wobei die Haltevorrichtung eine vorbestimmte geometrische Ausbildung aufweist, und wobei die Kraftfahrzeugssimulationsanordnung dazu ausgelegt ist, in der virtuellen Umgebung das virtuelle Bedienelement an einer virtuellen Haltevorrichtung entsprechend angeordnet darzustellen, die eine virtuelle geometrische Ausbildung aufweist, die zur vorbestimmten geometrischen Ausbildung der realen Haltevorrichtung korrespondiert. Wenn das reale Bedienelement an eine Haltevorrichtung angeordnet ist, besteht wiederum die Gefahr, dass ein Benutzer bei der Bedienung des realen Bedienelements unbeabsichtigt mit der realen Haltevorrichtung zusammenstößt und sich verletzt. Diese Ausgestaltung der Erfindung reduziert wiederum das Verletzungsrisiko und die Kollisionsgefahr, da dem Benutzer nun ebenfalls die reale Haltevorrichtung als virtuelle Haltevorrichtung angezeigt wird, wobei insbesondere die virtuell dargestellte Haltevorrichtung die reale Haltevorrichtung in Bezug auf das reale Bedienelement und ihre Anordnung relativ zum Benutzer sowie ihre geometrischen Abmessungen selbst in einer Eins-zu-Eins-Abbildung darstellt.

Des Weiteren betrifft die Erfindung ein Verfahren zur Simulation einer virtuellen Umgebung mit einem virtuellen Kraftfahrzeug mittels einer Kraftfahrzeugssimulationsanordnung. Dabei weist die Kraftfahrzeugssimulationsanordnung eine Simulationseinheit auf, die Bilder einer virtuellen Umgebung erzeugt, eine am Kopf tragbare Anzeigeeinrichtung, die die von der Simulationseinheit erzeugten Bilder anzeigt, und ein reales Bedienelement, mittels welchem die Kraftfahrzeugssimulationsanordnung durch einen Benutzer zur Konfiguration des virtuellen Kraftfahrzeugs bedienbar ist. Weiterhin legt die Simulationseinheit beim Erzeugen der Bilder der virtuellen Umgebung eine von einem virtuellen Standort ausgehende Perspektive, aus welcher die virtuelle Umgebung dargestellt wird, fest. Des Weiteren wird durch die Kraftfahrzeugssimulationsanordnung ein virtuelles Bedienelement in den Bildern der virtuellen Umgebung dargestellt, wobei die Kraftfahrzeugssimulationsanordnung weiterhin ein Erfassungsmittel aufweist, das zumindest eine Relativposition zwischen der am Kopf tragbaren Anzeigeeinrichtung und dem realen Bedienelement ermittelt, wobei die Simulationseinheit die ermittelte Relativposition bei der Bilderzeugung derart berücksichtigt, dass das virtuelle Bedienelement an einem Ort in der virtuellen Umgebung dargestellt wird, der eine Relativposition zum virtuellen Standort aufweist, die der Relativposition zwischen der am Kopf tragbaren Anzeigeeinrichtung und dem realen Bedienelement entspricht.

Die im Zusammenhang mit der erfindungsgemäßen Kraftfahrzeugssimulationsanordnung und ihren Ausgestaltungen genannten Vorteile gelten in gleicher Weise für das erfindungsgemäße Verfahren. Weiterhin ermöglichen die im Zusammenhang mit der erfindungsgemäßen Kraftfahrzeugssimulationsanordnung und ihren Ausgestaltungen genannten Merkmale und Merkmalskombinationen die Weiterbildung des erfindungsgemäßen Verfahrens durch weitere Verfahrensschritte.

Weitere Vorteile, Merkmale und Einzelheiten der Erfindung ergeben sich aus der nachfolgenden Beschreibung bevorzugter Ausführungsbeispiele sowie anhand der Zeichnung.

Dabei zeigen:
- Fig. 1a: eine schematische Darstellung einer Kraftfahrzeugssimulationsanordnung zur Simulation einer virtuellen Umgebung mit einem virtuellen Kraftfahrzeug, gemäß einem Ausführungsbeispiel der Erfindung;
- Fig. 1b: eine schematische Darstellung der durch die Kraftfahrzeugssimulationsanordnung gemäß Fig. 1a erzeugten virtuellen Umgebung, gemäß einem Ausführungsbeispiel der Erfindung;
- Fig. 2a: eine schematische Darstellung eines realen Bedienelements einer Kraftfahrzeugssimulationsanordnung gemäß einem Ausführungsbeispiel der Erfindung; und
- Fig. 2b: eine schematische Darstellung eines zum realen Bedienelement gemäß Fig. 2a in der virtuellen Umgebung korrespondierend dargestellten virtuellen Bedienelements gemäß einem Ausführungsbeispiel der Erfindung.

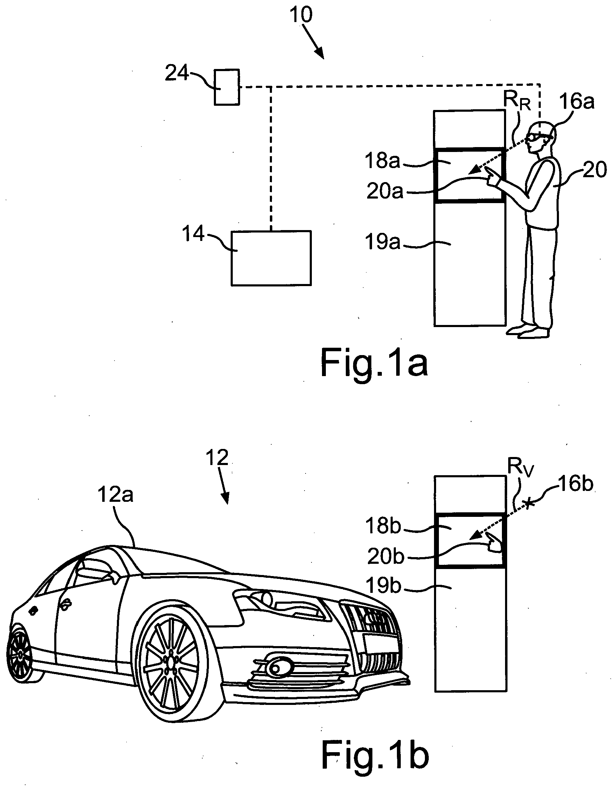

Fig. 1a zeigt eine schematische Darstellung einer Kraftfahrzeugssimulationsanordnung 10 zur Simulation einer virtuellen Umgebung 12 (vergleiche Fig. 1b) mit einem virtuellen Kraftfahrzeug 12a. Die Kraftfahrzeugssimulationsanordnung 10 weist dazu eine Simulationseinheit 14 auf, die dazu ausgelegt ist, Bilder der virtuellen Umgebung 12 zu erzeugen, und eine am Kopf tragbare Anzeigeeinrichtung 16a, die dazu ausgelegt ist, die von der Simulationseinheit 14 erzeugten Bilder anzuzeigen. Die am Kopf tragbare Anzeigeeinrichtung 16a ist hierbei exemplarisch als eine VR-Brille 16a ausgebildet, kann aber auch eine AR-Brille, ein VR-Helm und dergleichen sein.

Weiterhin weist die Kraftfahrzeugssimulationsanordnung 10 ein reales als Touchscreen 18a ausgebildetes Bedienelement auf, welches alternativ als Touchpad ausgebildet sein kann. Mittels des realen Touchscreens 18a soll dem Benutzer 20 die Möglichkeit bereitgestellt sein, die Kraftfahrzeugssimulationsanordnung 10 zu bedienen und insbesondere dabei das virtuelle Kraftfahrzeug 12a nach seinen Wünschen zu konfigurieren. Um dem Benutzer 20 die Bedienung des realen Touchscreens 18a mit am Kopf getragener Anzeigeeinrichtung 16a zu ermöglichen, wird der reale Touchscreen 18a in der virtuellen Umgebung 12 ortstreu in Bezug auf den Benutzer 20 als virtueller Touchscreen 18b dargestellt, wie Fig. 1b zeigt. Um dies zu ermöglichen, legt die Simulationseinheit 14 bei der Erzeugung der Bilder der virtuellen Umgebung 12 zunächst eine von einem virtuellen Standort 16b ausgehende Perspektive, aus welcher die virtuelle Umgebung 12 dargestellt wird, fest. Weiterhin weist die Kraftfahrzeugssimulationsanordnung 10 ein Erfassungsmittel 24 auf, das dazu ausgelegt ist, eine Relativposition R_{R} zwischen der VR-Brille 16a und dem Touchscreen 18a zu ermitteln. Diese ermittelte Relativposition R_{R} wird bei der Bilderzeugung derart berücksichtigt, dass der virtuelle Touchscreen 18b an dem Ort in der virtuellen Umgebung 12 dargestellt wird, der zum virtuellen Standort 16b dieselbe Relativposition R_{V} aufweist. Auf diese Weise sieht der Benutzer 20 den virtuellen Touchscreen 18b in der virtuellen Umgebung 12 im selben Abstand und in derselben Blickrichtung beziehungsweise unter demselben Blickwinkel wie er den realen Touchscreen 18a ohne aufgesetzte VR-Brille 16a sehen würde. Greift also der Benutzer 20 mit aufgesetzter VR-Brille 16a nach dem in der virtuellen Umgebung 12 dargestellten virtuellen Touchscreen 18b, so erfasst er automatisch den realen Touchscreen 18a. Das Erfassungsmittel 24 zur Erfassung der Relativposition R_{R} zwischen der VR-Brille 16a und dem Touchscreen 18a kann beispielsweise als Kamera oder Kamerasystem mit mehreren Kameras ausgebildet sein und insbesondere dazu befähigt sein, die VR-Brille 16a zu tracken, das heißt die aktuelle Position der VR-Brille 16a permanent wiederholt zu ermitteln und zu verfolgen. Da es sich bei dem realen Touchscreen 18a um eine fest installierte beziehungsweise nicht bewegliche Komponente handelt, deren Position somit statisch und festgelegt ist, kann diese Position im System beispielsweise in Bezug zu einem vorbestimmten Koordinatensystem vorgegeben sein, und das Erfassungsmittel 24 ermittelt die Position der VR-Brille 16 in diesem Koordinatensystem und zusätzlich aus der vorgegebenen Position des realen Touchscreens 18a die Relativposition zwischen der VR-Brille 16a und dem realen Touchscreen 18a.

Um nun dem Benutzer weiterhin eine möglichst genaue und zielgerichtete Bedienung zu ermöglichen und insbesondere auch, um unbeabsichtigte Kollisionen mit dem realen Touchscreen und damit möglicherweise einhergehenden Verletzungen zu vermeiden, wird zusätzlich auch durch die Kraftfahrzeugssimulationsanordnung 10 die Position der Hand 20a, oder zumindest eines Teils davon, erfasst und in korrespondierender Weise in der virtuellen Umgebung 12 als virtuelle Hand 20b dargestellt. Dabei ist es besonders vorteilhaft, wenn nicht nur die Position der Hand 20a an sich, sondern auch die Handstruktur und Ausrichtung, das heißt die Positionierung der einzelnen Finger in Bezug zur Handfläche, erfasst und in korrespondierender Weise in der virtuellen Umgebung 12 dargestellt wird. Denn dies hat den Vorteil, dass der Benutzer 20 zur Bedienung des realen Touchscreens 18a seine Hand 20a in der virtuellen Umgebung 12 bereits richtig ausrichten kann, bevor er den realen Touchscreen 18a berührt. Um dies zu ermöglichen, kann ein weiteres Erfassungsmittel (nicht dargestellt) vorgesehen sein, wie beispielsweise ebenfalls eine oder mehrere Kameras, insbesondere eine Infrarotkamera in Kombination mit einer oder mehreren Infrarotlichtquellen, einer Time-of-Flight-Kamera, und dergleichen. Dieses Erfassungsmittel ist also bevorzugt dazu ausgelegt, die Position der Hand 20a des Benutzers 20 dreidimensional zu erfassen, das heißt alle drei Raumkomponenten. Dieses Erfassungsmittel kann beispielsweise am realen Touchscreen 18a oder zumindest in der Nähe angeordnet sein, wodurch die Erfassung der Hand des Benutzers 20 in Bezug zum realen Touchscreen 18a auf besonders einfache Weise möglich ist.

Alternativ oder zusätzlich kann dieses Erfassungsmittel auch an der VR-Brille 16a selbst angeordnet sein, wodurch eine einfache Erfassung der Position der Hand 20a des Benutzers 20 relativ zur VR-Brille 16a möglich ist. Beides ermöglicht eine ortstreue Darstellung einer virtuellen Hand 20b in der virtuellen Umgebung 12, sodass die virtuelle Hand 20b dieselbe Position in Bezug um virtuellen Standort 16b sowie auch in Bezug zum virtuellen Touchscreen 18b aufweist wie die Position der realen Hand 20a in Bezug zur VR-Brille 16a sowie auch in Bezug zum realen Touchscreen 18a.

Weiterhin ist es bevorzugt, dass der reale Touchscreen 18a an einer Stele 19a angeordnet ist. Um nun auch einen Zusammenstoß mit dieser Stele 19a, ein Dagegenlaufen und oder Ähnliches zu vermeiden, ist es bevorzugt, dass auch in der virtuellen Umgebung eine virtuelle Stele 19b mit vorzugsweise identischer Position und Abmessungen dargestellt wird. Somit lässt sich insgesamt eine besonders benutzerfreundliche und insbesondere auch besonders sichere Kraftfahrzeugssimulationsanordnung 10 bereitstellen.

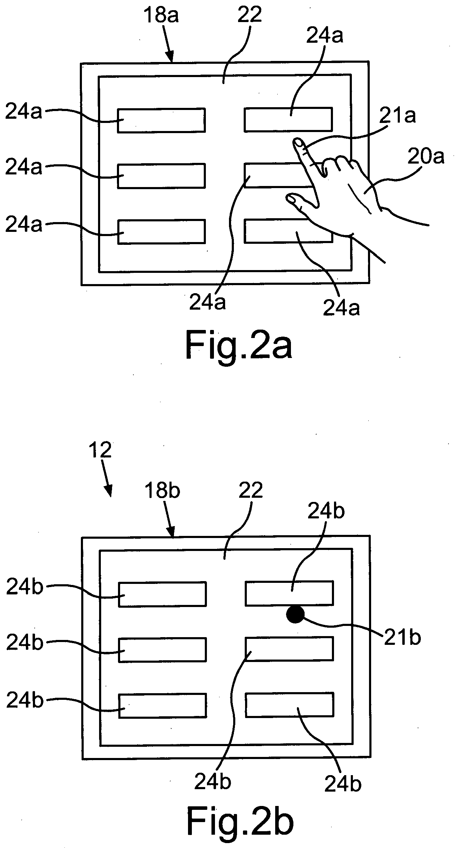

Fig. 2a zeigt eine schematische Darstellung des realen Touchscreens 18a, und Fig. 2b eine schematische Darstellung des korrespondierenden virtuellen Touchscreens 18b in der virtuellen Umgebung 12. Der reale Touchscreen 18a weist eine Bedienfläche 22 auf, welche berührsensitiv ausgebildet ist und auf welcher ein Bedienmenü darstellbar ist. Dieses Bedienmenü kann beispielsweise verschiedene vorbestimmte Bereiche 24a aufweisen, welchen eine jeweilige Funktion zugeordnet ist. Mit anderen Worten, wählt der Benutzer 20 einen der dargestellten Bereiche 24a aus, so wird die diesem Bereich 24a zugeordnete Funktion ausgelöst. Funktionen können dabei beispielsweise das Wechseln des virtuell dargestellten Kraftfahrzeugs 12a oder dessen Konfiguration sein, zum Beispiel die Wahl einer bestimmten Farbe, der Felgen und so weiter.

Um nun diesen realen Touchscreen 18a auch mit aufgesetzter VR-Brille 16 bedienen zu können, wird in der virtuellen Umgebung 12 dem Benutzer dieser Touchscreen identisch als virtueller Touchscreen 18b dargestellt. Damit einhergehend werden auch virtuelle Menüpunkte 24 auf dem virtuellen Touchscreen 18b dargestellt, welche in ihrer Anordnung zu den realen Menüpunkten 24a des realen Touchscreens 18a korrespondieren. Auf diese Weise kann ein Benutzer 20 einfach und gezielt auch mit aufgesetzter VR-Brille 16a die gewünschten virtuellen Menüpunkte 24b und damit die entsprechenden realen Menüpunkte 24a auswählen.

Weiterhin ist es auch möglich, wie bereits beschrieben, in der virtuellen Umgebung 12 dem Benutzer auch ortstreu eine virtuelle Hand 20b darzustellen, um die Bedienung zu erleichtern und das Verletzungsrisiko zu reduzieren. In einer besonders einfachen Ausführungsform kann es auch vorgesehen sein, dass in der virtuellen Umgebung 12 lediglich ein Anzeigeelement 21b, welches zur Hand 20a des Benutzers 20 oder auch nur einem Teil der Hand 20a, wie beispielsweise einem Finger 21a, korrespondiert, dargestellt wird. Der reale Touchscreen 18a kann beispielsweise so ausgestaltet sein, dass bei einer Berührung der Bedienoberfläche 22 der Berührort erfasst wird, jedoch eine Funktion nicht unmittelbar, sondern erst bei Überschreiten einer vorbestimmten Bedienkraft ausgelöst wird. Sobald also der Berührort durch den realen Touchscreen 18a erfasst wird, kann in der virtuellen Umgebung 12 auf dem virtuellen Touchscreen 18b dem Benutzer der Berührort durch das virtuelle Anzeigeelement 21b, zum Beispiel ein Punkt oder Kreis oder Symbol, an identischer Stelle angezeigt werden. Somit kann der Benutzer 20 den realen Touchscreen 18a mit geringer Bedienkraft berühren, und mit Hilfe des daraufhin angezeigten virtuellen Anzeigeelements 21b seinen Finger 21a auf einen gewünschten Menüpunkt bewegen und durch Erhöhung der Bedienkraft die zugeordnete Funktion auslösen.

Insgesamt wird so eine Kraftfahrzeugssimulationsanordnung bereitgestellt, welche einem Benutzer auch mit aufgesetzter VR-Brille eine einfache und gezielte Bedienung eines Touchscreens ermöglicht, ohne dabei die VR-Brille absetzen oder die Simulation unterbrechen zu müssen und gleichzeitig auch die Kollisionsgefahr mit realen Komponenten und daraus resultierenden Verletzungsrisiken reduziert.

## Patentansprüche

1. Kraftfahrzeugsimulationsanordnung (10) zur Simulation einer virtuellen Umgebung mit einem virtuellen Kraftfahrzeug (12a), die Kraftfahrzeugsimulationsanordnung (10) aufweisend
- eine Simulationseinheit (14), die dazu ausgelegt ist, Bilder einer virtuellen Umgebung (12) mit einem virtuellen Kraftfahrzeug (12a) zu erzeugen,
- eine am Kopf eines Benutzers tragbare Anzeigeeinrichtung (16a), die dazu ausgelegt ist, die von der Simulationseinheit (14) erzeugten Bilder anzuzeigen, und
- ein reales Bedienelement (18a),
- wobei die Simulationseinheit (14) weiterhin dazu ausgelegt ist, bei einer Erzeugung von Bildern der virtuellen Umgebung (12) eine von einem virtuellen Standort (16b) ausgehende Perspektive, aus welcher die virtuelle Umgebung (12) dargestellt wird, festzulegen, und
- wobei die Kraftfahrzeugsimulationsanordnung (10) dazu ausgelegt ist, ein virtuelles Bedienelement (18b) in den Bildern der virtuellen Umgebung (12) darzustellen,
**dadurch gekennzeichnet, dass**
- die Kraftfahrzeugsimulationsanordnung (10) ein Erfassungsmittel (24) aufweist, das dazu ausgelegt ist, zumindest eine Relativposition (R_{R}) zwischen der am Kopf tragbaren Anzeigeeinrichtung (16a) und dem realen Bedienelement (18a) zu ermitteln, wobei die Simulationseinheit (14) dazu ausgelegt ist, die ermittelte Relativposition (R_{R}) bei der Bilderzeugung derart zu berücksichtigen, dass das virtuelle Bedienelement (18b) an einem Ort in der virtuellen Umgebung (12) dargestellt ist, der eine Relativposition (R_{V}) zum virtuellen Standort (16b) aufweist, wobei die Relativposition (R_{V}) zwischen dem virtuellen Bedienelement (18b) und dem virtuellen Standort (16b) der Relativposition (R_{R}) zwischen der am Kopf tragbaren Anzeigeeinrichtung (16a) und dem realen Bedienelement (18a) entspricht,
- wobei das reale Bedienelement (18a) derart eingerichtet ist, dass mit dem realen Bedienelement (18a) die Kraftfahrzeugsimulationsanordnung (10) durch den Benutzer (20) zur Konfiguration des virtuellen Kraftfahrzeugs (12a) bedienbar ist,
- wobei das reale Bedienelement (18a) eine berührsensitive Bedienoberfläche (22) aufweist, so dass das reale Bedienelement (18a) dazu ausgelegt ist, eine Berührung der Bedienoberfläche (22) durch den Benutzer (20) zu erfassen,
- wobei das reale Bedienelement (18a) dazu ausgelegt ist, bei einer Berührung der Bedienoberfläche (22) einen Berührort als Position des mindestens einen Teils (21a) der Hand (20b) des Benutzers (20) zu erfassen, und
- wobei die Kraftfahrzeugsimulationsanordnung (10) dazu ausgelegt ist, das virtuelle Bedienelement (18b) als virtuellen Touchscreen (18b) darzustellen und die erfasste Position an einer korrespondierenden Stelle des virtuellen Touchscreens (18b) durch ein virtuelles Anzeigeelement (20b; 21b) darzustellen.

2. Kraftfahrzeugsimulationsanordnung (10) nach Anspruch 1, **dadurch gekennzeichnet, dass**,
falls sich mindestens ein Teil (21a) einer Hand eines Benutzers (20) in einem vorbestimmten Erfassungsbereich der Kraftfahrzeugsimulationsanordnung (10) befindet, die Kraftfahrzeugsimulationsanordnung (10) dazu ausgelegt ist, eine Position des mindestens einen Teils (21a) der Hand des Benutzers (20) in Bezug auf das reale Bedienelement (18a) zu ermitteln und die ermittelte Position bei der Erzeugung der Bilder derart zu berücksichtigen, dass in der virtuellen Umgebung (12) ein den mindestens einen Teil (21a) der Hand repräsentierendes virtuelles Anzeigeelement (20b; 21b) in der selben Position in Bezug auf das virtuelle Bedienelement (18b) dargestellt wird.

3. Kraftfahrzeugsimulationsanordnung (10) nach einem der vorhergehenden Ansprüche,
**dadurch gekennzeichnet, dass**
das reale Bedienelement (18a) als Touchpad oder Touchscreen ausgebildet ist.

4. Kraftfahrzeugsimulationsanordnung (10) nach einem der vorhergehenden Ansprüche,
**dadurch gekennzeichnet, dass**
die Kraftfahrzeugsimulationsanordnung (10) derart eingerichtet ist, dass bei der Darstellung des virtuellen Bedienelements (18b) in der virtuellen Umgebung (12) das virtuelle Bedienelement (18b) eine geometrische Ausgestaltung aufweist, die der geometrischen Ausgestaltung des realen Bedienelements (18a) entspricht.

5. Kraftfahrzeugsimulationsanordnung (10) nach einem der Ansprüche 3 oder 4,
**dadurch gekennzeichnet, dass**
die Kraftfahrzeugsimulationsanordnung (10) derart eingerichtet ist, dass durch eine Betätigung des realen Bedienelements (18a) in einem vorbestimmten Bereich (24a) der Bedienoberfläche (22) eine zumindest bis zum Zeitpunkt der Betätigung diesem vorbestimmten Bereich (24a) zugeordnete Funktion ausgelöst wird, wobei die Kraftfahrzeugsimulationsanordnung (10) weiterhin dazu ausgelegt ist, in der virtuellen Umgebung (12) einen der Funktion zugeordneten Menüpunkt auf dem virtuellen Bedienelement (18b) in einem virtuellen Bereich (24b) des virtuellen Bedienelements (18b) darzustellen, der in seiner Anordnung bezüglich des virtuellen Bedienelements (18b) zu einer Anordnung des vorbestimmten Bereichs (24a) des realen Bedienelements (18a) bezüglich des realen Bedienelements (18a) korrespondiert.

6. Kraftfahrzeugsimulationsanordnung (10) nach einem der Ansprüche 2 bis 5,
**dadurch gekennzeichnet, dass**
der Erfassungsbereich der Kraftfahrzeugsimulationsanordnung (10) einen Erfassungsbereich mit vorbestimmten Abmessungen in Bezug auf das reale Bedienelement (18a) darstellt, wobei das reale Bedienelement (18a) ein zweites Erfassungsmittel aufweist, das dazu ausgelegt ist, die Position des mindestens einen Teils (21a) der Hand (20a) des Benutzers (20) in Bezug auf das reale Bedienelement (18a), insbesondere dreidimensional, zu ermitteln.

7. Kraftfahrzeugsimulationsanordnung (10) nach einem der Ansprüche 2 bis 5,
**dadurch gekennzeichnet, dass**
der Erfassungsbereich der Kraftfahrzeugsimulationsanordnung (10) einen Erfassungsbereich mit vorbestimmten Abmessungen in Bezug auf die am Kopf tragbare Anzeigeeinrichtung (16a) darstellt, wobei die am Kopf tragbare Anzeigeeinrichtung (16a) ein zweites Erfassungsmittel aufweist, das dazu ausgelegt ist, die Position des mindestens einen Teils (21a) der Hand (20a) des Benutzers (20) in Bezug auf das reale Bedienelement (18a) und/oder in Bezug auf die am Kopf tragbare Anzeigeeinrichtung (16a), insbesondere dreidimensional, zu ermitteln.

8. Kraftfahrzeugsimulationsanordnung (10) nach einem der Ansprüche 6 oder 7,
**dadurch gekennzeichnet, dass**
das zweite Erfassungsmittel dazu ausgelegt ist, eine geometrische Handstruktur der Hand (20a) des Benutzers (20) zu erfassen, wobei die Kraftfahrzeugsimulationsanordnung (10) dazu ausgelegt ist, als Anzeigeelement (20b; 21b) in der virtuellen Umgebung (12) eine virtuelle Hand (20b) mit einer geometrischen Handstruktur darzustellen, die der durch das zweite Erfassungsmittel ermittelten geometrischen Handstruktur entspricht.

9. Kraftfahrzeugsimulationsanordnung (10) nach einem der vorhergehenden Ansprüche,
**dadurch gekennzeichnet, dass**
das reale Bedienelement (18a) an einer realen Haltevorrichtung (19a), die insbesondere als Stele und/oder Ständer und/oder Standfuß ausgebildet ist, angeordnet ist, wobei die Haltevorrichtung (19a) eine vorbestimmte geometrische Ausbildung aufweist, wobei die Kraftfahrzeugsimulationsanordnung (10) dazu ausgelegt ist, in der virtuellen Umgebung (12) das virtuelle Bedienelement (18b) an einer virtuellen Haltevorrichtung (19b) entsprechend angeordnet darzustellen, die eine virtuelle geometrische Ausbildung aufweist, die zur vorbestimmten geometrischen Ausbildung der realen Haltevorrichtung (19a) korrespondiert.

10. Verfahren zur Simulation einer virtuellen Umgebung (12) mit einem virtuellen Kraftfahrzeug mittels einer Kraftfahrzeugsimulationsanordnung (10), die aufweist
- eine Simulationseinheit (14), die Bilder einer virtuellen Umgebung (12) mit einem virtuellen Kraftfahrzeug (12a) erzeugt,
- eine am Kopf eines Benutzers tragbare Anzeigeeinrichtung (16a), die die von der Simulationseinheit (14) erzeugten Bilder anzeigt, und
- ein reales Bedienelement (18a),
- wobei die Simulationseinheit (14) beim Erzeugen der Bilder der virtuellen Umgebung (12) eine von einem virtuellen Standort (16b) ausgehende Perspektive, aus welcher die virtuelle Umgebung (12) dargestellt wird, festlegt, und
- wobei die Kraftfahrzeugsimulationsanordnung (10) ein virtuelles Bedienelement (18b) in den Bildern der virtuellen Umgebung (12) darstellt,
**dadurch gekennzeichnet, dass**
- die Kraftfahrzeugsimulationsanordnung (10) ein Erfassungsmittel (24) aufweist, das zumindest eine Relativposition (R_{R}) zwischen der am Kopf tragbaren Anzeigeeinrichtung (16a) und dem realen Bedienelement (18a) ermittelt, wobei die Simulationseinheit (14) die ermittelte Relativposition (R_{R}) bei der Bilderzeugung derart berücksichtigt, dass das virtuelle Bedienelement (18b) an einem Ort in der virtuellen Umgebung (12) dargestellt wird, der eine Relativposition (R_{V}) zum virtuellen Standort (16b) aufweist, die der Relativposition (R_{R}) zwischen der am Kopf tragbaren Anzeigeeinrichtung (16a) und dem realen Bedienelement (18a) entspricht,
- wobei das reale Bedienelement (18a) derart eingerichtet ist, dass mit dem realen Bedienelement (18a) die Kraftfahrzeugsimulationsanordnung (10) durch den Benutzer (20) zur Konfiguration des virtuellen Kraftfahrzeugs (12a) bedienbar ist,
- wobei das reale Bedienelement (18a) eine berührsensitive Bedienoberfläche (22) aufweist, so dass das reale Bedienelement (18a) eine Berührung der Bedienoberfläche (22) durch den Benutzer (20) erfasst,
- wobei das reale Bedienelement (18a) bei einer Berührung der Bedienoberfläche (22) einen Berührort als Position des mindestens einen Teils (21a) der Hand (20b) des Benutzers (20) erfasst, und
- wobei die Kraftfahrzeugsimulationsanordnung (10) das virtuelle Bedienelement (18b) als virtuellen Touchscreen (18b) darstellt und die erfasste Position an einer korrespondierenden Stelle des virtuellen Touchscreens (18b) durch ein virtuelles Anzeigeelement (20b; 21b) darstellt.

## Claims

1. Motor vehicle simulation system (10) for simulating a virtual environment with a virtual motor vehicle (12a), the motor vehicle simulation system (10) having
- a simulation unit (14) which is designed to generate pictures of a virtual environment (12) with a virtual motor vehicle (12a),
- a display apparatus (16a) wearable at the head of a user, which is designed to display the pictures generated by the simulation unit (14), and
- a real operating element (18a),
- wherein the simulation unit (14) is further designed to define, at a generation of pictures of the virtual environment (12), a perspective starting from a virtual location (16b), from which the virtual environment (12) is shown, and
- wherein the motor vehicle simulation system (10) is designed to show a virtual operating element (18b) in the pictures of the virtual environment (12),
**characterised in that**
- the motor vehicle simulation system (10) has a detecting means (24) which is designed to identify at least one relative position (R_{R}) between the display device (16a) wearable at the head and the real operating element (18a), wherein the simulation unit (14) is designed to take into consideration the identified relative position (R_{R}) in the generation of pictures such that the virtual operating element (18b) is shown at a place in the virtual environment (12) which has a relative position (R_{V}) to the virtual location (16b), wherein the relative position (R_{V}) between the virtual operating element (18b) and the virtual location (16b) corresponds to the relative position (R_{R}) between the display device (16a) wearable at the head and the real operating element (18a),
- wherein the real operating element (18a) is configured such that using the real operating element (18a) the motor vehicle simulation system (10) can be operated by the user (20) for the configuration of the virtual motor vehicle (12a),
- wherein the real operating element (18a) has a touch-sensitive operating surface (22) such that the real operating element (18a) is designed to detect a touch of the operating surface (22) on the part of the user (20),
- wherein the real operating element (18a) is designed at a touch of the operating surface (22) to detect a touch location as position of the at least one part (21a) of the hand (20b) of the user (20), and
- wherein the motor vehicle simulation system (10) is designed to show the virtual operating element (18b) as virtual touchscreen (18b) and to show the detected position at a corresponding point on the virtual touchscreen (18b) by means of a virtual display element (20b; 21b).

2. Motor vehicle simulation system (10) according to claim 1,
**characterised in that**
if at least one part (21a) of a hand of a user (20) is located in a predetermined detection region of the motor vehicle simulation system (10), the motor vehicle simulation system (10) is designed to identify a position of the at least one part (21a) of the hand of the user (20) with respect to the real operating element (18a) and to take into consideration the identified position in the generation of the pictures such that in the virtual environment (12) a virtual display element (20b; 21b) representing the at least one part (21a) of the hand is shown in the same position with respect to the virtual operating element (18b).

3. Motor vehicle simulation system (10) according to any of the preceding claims,
**characterised in that**
the real operating element (18a) is formed as touchpad or touchscreen.

4. Motor vehicle simulation system (10) according to any of the preceding claims,
**characterised in that**
the motor vehicle simulation system (10) is configured such that in the representation of the virtual operating element (18b) in the virtual environment (12) the virtual operating element (18b) has a geometric form which corresponds to the geometric form of the real operating element (18a).

5. Motor vehicle simulation system (10) according to any of claims 3 or 4,
**characterised in that**
the motor vehicle simulation system (10) is configured such that by means of an operating of the real operating element (18a) in a predetermined region (24a) of the operating surface (22) a function is triggered which is, at least up to the point in time of the operating, assigned to this predetermined region (24a), wherein the motor vehicle simulation system (10) is further designed to show in the virtual environment (12) a menu item assigned to the function on the virtual operating element (18b) in a virtual region (24b) of the virtual operating element (18b), which in its disposition with respect to the virtual operating element (18b) corresponds to a disposition of the predetermined region (24a) of the real operating element (18a) with respect to the real operating element (18a).

6. Motor vehicle simulation system (10) according to any of claims 2 to 5,
**characterised in that**
the detection region of the motor vehicle simulation system (10) shows a detection region with predetermined dimensions in respect of the real operating element (18a), wherein the real operating element (18a) has a second detection means which is designed to identify the position of the at least one part (21a) of the hand (20a) of the user (20) in respect of the real operating element (18a), in particular in a three-dimensional manner.

7. Motor vehicle simulation system (10) according to any of claims 2 to 5,
**characterised in that**
the detection region of the motor vehicle simulation system (10) shows a detection region with predetermined dimensions in respect of the display apparatus (16a) wearable at the head, wherein the display apparatus (16a) wearable at the head has a second detection means which is designed to identify the position of the at least one part (21a) of the hand (20a) of the user (20) in respect of the real operating element (18a) and/or in respect of the display apparatus (16a) wearable at the head, in particular in a three-dimensional manner.

8. Motor vehicle simulation system (10) according to any of claims 6 or 7,
**characterised in that**
the second detection means is designed to detect a geometric hand structure of the hand (20a) of the user (20), wherein the motor vehicle simulation system (10) is designed to show as display element (20b; 21b) in the virtual environment (12) a virtual hand (20b) having a geometric hand structure which corresponds to the geometric hand structure detected by the second detection means.

9. Motor vehicle simulation system (10) according to any of the preceding claims,
**characterised in that**
the real operating element (18a) is disposed at a real holding device (19a) which is in particular formed as stele and/or column and/or stand, wherein the holding device (19a) has a predetermined geometric form, wherein the motor vehicle simulation system (10) is designed to show in the virtual environment (12) the virtual operating element (18b) correspondingly disposed at a virtual holding device (19b), which has a virtual geometric form which corresponds to the predetermined geometric form of the real holding device (19a).

10. Method for simulating a virtual environment (12) with a virtual motor vehicle using a motor vehicle simulation system (10), which has
- a simulation unit (14) which generates pictures of a virtual environment (12) with a virtual motor vehicle (12a),
- a display apparatus (16a) wearable at the head of a user, which shows the pictures generated by the simulation unit (14), and
- a real operating element (18a),
- wherein the simulation unit (14) at the generation of the pictures of the virtual environment (12) defines a perspective starting from a virtual location (16b), from which the virtual environment (12) is shown, and
- wherein the motor vehicle simulation system (10) shows a virtual operating element (18b) in the pictures of the virtual environment (12),
**characterised in that**
- the motor vehicle simulation system (10) has a detection means (24) which identifies at least one relative position (R_{R}) between the display apparatus (16a) wearable at the head and the real operating element (18a), wherein the simulation unit (14) takes into consideration the detected relative position (R_{R}) in the generation of pictures such that the virtual operating element (18b) is shown at a place in the virtual environment (12) which has a relative position (R_{V}) to the virtual location (16b) which corresponds to the relative position (R_{R}) between the display apparatus (16a) wearable at the head and the real operating element (18a),
- wherein the real operating element (18a) is configured such that with the real operating element (18a) the motor vehicle simulation system (10) can be operated by the user (20) for configuring the virtual motor vehicle (12a),
- wherein the real operating element (18a) has a touch-sensitive operating surface (22) such that the real operating element (18a) detects a touch of the operating surface (22) on the part of the user (20),
- wherein the real operating element (18a) in the case of a touch of the operating surface (22) detects a touch location as position of the at least one part (21a) of the hand (20b) of the user (20), and
- wherein the motor vehicle simulation system (10) shows the virtual operating element (18b) as virtual touchscreen (18b) and shows the detected position at a corresponding point on the virtual touchscreen (18b) by means of a virtual display element (20b; 21b).

## Revendications

1. Simulateur de véhicule automobile (10) destiné à la simulation d'un environnement virtuel avec un véhicule automobile virtuel (12a), lequel simulateur de véhicule automobile (10) comporte :
- une unité de simulation (14) qui est conçue pour produire des images d'un environnement virtuel (12) avec un véhicule automobile virtuel (12a),
- un dispositif d'affichage (16a) qui peut être porté sur la tête d'un utilisateur et qui est conçu pour afficher les images produites par l'unité de simulation (14),
- un élément de commande réel (18a),
- dans lequel l'unité de simulation (14) est aussi conçue pour spécifier lors d'une production d'images de l'environnement virtuel (12) une perspective qui part d'un emplacement virtuel (16b) et à partir de laquelle l'environnement virtuel (12) est représenté, et
- dans lequel le simulateur de véhicule automobile (10) est conçu pour représenter un élément de commande virtuel (18b) dans les images de l'environnement virtuel (12),
**caractérisé en ce que**
- le simulateur de véhicule automobile (10) comporte un moyen de détection (24) qui est conçu pour déterminer au moins une position relative (R_{R}) entre le dispositif d'affichage (16a) pouvant être porté sur la tête et l'élément de commande réel (18a), l'unité de simulation (14) étant conçue pour prendre en compte lors de la production d'images la position relative déterminée (R_{R}) de telle sorte que l'élément de commande virtuel (18b) est représenté dans l'environnement virtuel (12) à un emplacement qui présente une position relative (R_{V}) par rapport à l'emplacement virtuel (16b), laquelle position relative (R_{V}) entre l'élément de commande virtuel (18b) et l'emplacement virtuel (16b) correspond à la position relative (R_{R}) entre le dispositif d'affichage (16a) pouvant être porté sur la tête et l'élément de commande réel (18a),
- dans lequel l'élément de commande réel (18a) est réglé de telle sorte que le simulateur de véhicule automobile (10) peut être commandé avec l'élément de commande réel (18a) par l'utilisateur (20) en vue de la configuration du véhicule automobile virtuel (12a),
- dans lequel l'élément de commande réel (18a) comporte une surface de commande tactile (22) de telle sorte que l'élément de commande réel (18a) est conçu pour détecter le fait que l'utilisateur (20) touche la surface de commande (22),
- dans lequel l'élément de commande réel (18a) est conçu pour, lorsque la surface de commande (22) est touchée, détecter un emplacement de contact comme position de l'au moins une partie (21a) de la main (20b) de l'utilisateur (20), et
- dans lequel le simulateur de véhicule automobile (10) est conçu pour représenter l'élément de commande virtuel (18b) sous forme d'écran tactile virtuel (18b) et pour représenter par un élément d'affichage virtuel (20b ; 21b) la position détectée au niveau d'un emplacement correspondant de l'écran tactile virtuel (18b).

2. Simulateur de véhicule automobile (10) selon la revendication 1, **caractérisé en ce que**, si au moins une partie (21a) d'une main d'un utilisateur (20) se trouve dans une zone de détection prédéterminée du simulateur de véhicule automobile (10), le simulateur de véhicule automobile (10) est conçu pour déterminer une position de l'au moins une partie (21a) de la main de l'utilisateur (20) par rapport à l'élément de commande réel (18a) et pour prendre en compte lors de la production des images la position déterminée de telle sorte que, dans l'environnement virtuel (12), un élément d'affichage virtuel (20b ; 21b) représentant l'au moins une partie (21a) de la main est représenté dans la même position par rapport à l'élément de commande virtuel (18b).

3. Simulateur de véhicule automobile (10) selon l'une quelconque des revendications précédentes, **caractérisé en ce que** l'élément de commande réel (18a) est réalisé sous forme de pavé tactile ou d'écran tactile.

4. Simulateur de véhicule automobile (10) selon l'une quelconque des revendications précédentes, **caractérisé en ce que** le simulateur de véhicule automobile (10) est réglé de telle sorte que, lors de la représentation de l'élément de commande virtuel (18b) dans l'environnement virtuel (12), l'élément de commande virtuel (18b) présente une forme géométrique qui correspond à la forme géométrique de l'élément de commande réel (18a).

5. Simulateur de véhicule automobile (10) selon l'une quelconque des revendications 3 ou 4, **caractérisé en ce que** le simulateur de véhicule automobile (10) est réglé de telle sorte que, par un actionnement de l'élément de commande réel (18a) dans une zone prédéterminée (24a) de la surface de commande (22), une fonction associée à cette zone prédéterminée (24a) au moins jusqu'à l'instant de l'actionnement est déclenchée, le simulateur de véhicule automobile (10) étant également conçu pour représenter dans l'environnement virtuel (12) un point de menu associé à la fonction sur l'élément de commande virtuel (18b) dans une zone virtuelle (24b) de l'élément de commande virtuel (18b), zone virtuelle dont la disposition par rapport à l'élément de commande virtuel (18b) correspond à une disposition de la zone prédéterminée (24a) de l'élément de commande réel (18a) par rapport à l'élément de commande réel (18a).

6. Simulateur de véhicule automobile (10) selon l'une quelconque des revendications 2 à 5, **caractérisé en ce que** la zone de détection du simulateur de véhicule automobile (10) représente une zone de détection ayant des dimensions prédéterminées par rapport à l'élément de commande réel (18a), lequel élément de commande réel (18a) comporte un deuxième moyen de détection qui est conçu pour déterminer la position de l'au moins une partie (21a) de la main (20a) de l'utilisateur (20) par rapport à l'élément de commande réel (18a), en particulier dans trois dimensions.

7. Simulateur de véhicule automobile (10) selon l'une quelconque des revendications 2 à 5, **caractérisé en ce que** la zone de détection du simulateur de véhicule automobile (10) représente une zone de détection ayant des dimensions prédéterminées par rapport au dispositif d'affichage (16a) pouvant être porté sur la tête, lequel dispositif d'affichage (16a) pouvant être porté sur la tête comporte un deuxième moyen de détection qui est conçu pour déterminer la position de l'au moins une partie (21a) de la main (20a) de l'utilisateur (20) par rapport à l'élément de commande réel (18a) et/ou par rapport au dispositif d'affichage (16a) pouvant être porté sur la tête, en particulier dans trois dimensions.

8. Simulateur de véhicule automobile (10) selon l'une quelconque des revendications 6 ou 7, **caractérisé en ce que** le deuxième moyen de détection est conçu pour détecter une structure manuelle géométrique de la main (20a) de l'utilisateur (20), le simulateur de véhicule automobile (10) étant conçu pour représenter comme élément d'affichage (20b ; 21b) dans l'environnement virtuel (12) une main virtuelle (20b) avec une structure manuelle géométrique qui correspond à la structure manuelle géométrique déterminée par le deuxième moyen de détection.

9. Simulateur de véhicule automobile (10) selon l'une quelconque des revendications précédentes, **caractérisé en ce que** l'élément de commande réel (18a) est agencé au niveau d'un dispositif de fixation réel (19a) qui est réalisé notamment sous forme de socle et/ou de support et/ou de pied, le dispositif de fixation (19a) présentant une forme géométrique prédéterminée, le simulateur de véhicule automobile (10) étant conçu pour représenter dans l'environnement virtuel (12) l'élément de commande virtuel (18b) agencé de manière correspondante au niveau d'un dispositif de fixation virtuel (19b) qui présente une forme géométrique virtuelle qui correspond à la forme géométrique prédéterminée du dispositif de fixation réel (19a).

10. Procédé de simulation d'un environnement virtuel (12) avec un véhicule automobile virtuel au moyen d'un simulateur de véhicule automobile (10) qui comporte
- une unité de simulation (14) qui produit des images d'un environnement virtuel (12) avec un véhicule automobile virtuel (12a),
- un dispositif d'affichage (16a) qui peut être porté sur la tête d'un utilisateur et qui affiche les images produites par l'unité de simulation (14),
- un élément de commande réel (18a),
- dans lequel l'unité de simulation (14) spécifie lors de la production des images de l'environnement virtuel (12) une perspective qui part d'un emplacement virtuel (16b) et à partir de laquelle l'environnement virtuel (12) est représenté, et
- dans lequel le simulateur de véhicule automobile (10) représente un élément de commande virtuel (18b) dans les images de l'environnement virtuel (12), **caractérisé en ce que**
- le simulateur de véhicule automobile (10) comporte un moyen de détection (24) qui détermine au moins une position relative (R_{R}) entre le dispositif d'affichage (16a) pouvant être porté sur la tête et l'élément de commande réel (18a), l'unité de simulation (14) étant conçue pour prendre en compte lors de la production d'images la position relative déterminée (R_{R}) de telle sorte que l'élément de commande virtuel (18b) est représenté dans l'environnement virtuel (12) à un emplacement qui présente une position relative (R_{V}) par rapport à l'emplacement virtuel (16b), laquelle position relative correspond à la position relative (R_{R}) entre le dispositif d'affichage (16a) pouvant être porté sur la tête et l'élément de commande réel (18a),
- dans lequel l'élément de commande réel (18a) est réglé de telle sorte que le simulateur de véhicule automobile (10) peut être commandé avec l'élément de commande réel (18a) par l'utilisateur (20) en vue de la configuration du véhicule automobile virtuel (12a),
- dans lequel l'élément de commande réel (18a) comporte une surface de commande tactile (22) de telle sorte que l'élément de commande réel (18a) est conçu pour détecter le fait que l'utilisateur (20) touche la surface de commande (22),
- dans lequel l'élément de commande réel (18a) est conçu pour, lorsque la surface de commande (22) est touchée, détecter un emplacement de contact comme position de l'au moins une partie (21a) de la main (20b) de l'utilisateur (20), et
- dans lequel le simulateur de véhicule automobile (10) représente l'élément de commande virtuel (18b) sous forme d'écran tactile virtuel (18b) et représente par un élément d'affichage virtuel (20b ; 21b) la position détectée au niveau d'un emplacement correspondant de l'écran tactile virtuel (18b).
